# EUROPEAN PATENT APPLICATION

(11) **EP 1 201 721 A1**
(43) Date of publication of application: **02.05.2002**
(21) Application number: 00951870.5
(22) Date of filing: 02.08.2000
(51) Int. Cl.: C09D 183/04, C09D 183/06

(54) **COATING COMPOSITION**

(30) Priority: 05.08.1999 JP 22306399
(71) Applicant: Nihon Yamamura Glass Co. Ltd., Nishinomiya-shi, Hyogo 662-8586 (JP)
(72) Inventor: ZHANG, Zuyi Nihon Yamamura Glass Co., Ltd., Nishinomiya-shi, Hyogo 662-8586 (JP); KAWABE, Kazuhiro Nihon Yamamura Glass Co., Ltd., Nishinomiya-shi, Hyogo 662-8586 (JP); KUMANO, Satoshi Nihon Yamamura Glass Co., Ltd., Nishinomiya-shi, Hyogo 662-8586 (JP); WAKABAYASHI, Hajimu Nihon Yamamura Glass Co., Ltd., Nishinomiya-shi, Hyogo 662-8586 (JP); KONISHI, Akio Nihon Yamamura Glass Co., Ltd., Nishinomiya-shi, Hyogo 662-8586 (JP)
(74) Representative: Gille Hrabal Struck Neidlein Prop Roos
(86) International application number: JP0005193
(87) International publication number: WO0110965

(57) **Abstract**

A coating composition which comprises (A) a solution comprising a silicone oligomer having an average structural unit represented by R¹ₙSiO_{x/2}(OH)_{y}(OR²)_{z} (R¹ represents an alkyl group having 1 to 3 carbon atoms, vinyl group or phenyl group, R² represents an alkyl group having 1 to 3 carbon atoms, a plurality of R¹ or R² may represent the same group or different groups and n, x, y and z represent numbers satisfying relations of: 0.8≦n≦1.7, 2<x<3.2, y>0, z>0 and y+z=4-n-x) and (B) a latently acidic catalyst. By using the coating composition, a coating film of an organopolysiloxane exhibiting excellent chemical durability such as water resistance and resistance to boiling water can be obtained from a solution comprising a silicone oligomer which is obtained by hydrolysis and polycondensation of an alkoxysilane.

## Description

### TECHNICAL FIELD

The present invention relates to a coating composition. More particularly, the present invention relates to a coating composition which comprises a latently acidic catalyst as a curing agent and can form a coating film of an organopolysiloxane exhibiting excellent chemical durability such as water resistance and resistance to boiling water.

### BACKGROUND ART

Heretofore, bulk materials, coating films and independent films which exhibit excellent chemical durability such as weatherability, water resistance and chemical resistance and excellent mechanical properties such as hardness have been desired. In this connection, studies on preparing silicone oligomers from organoalkoxysilanes have been actively conducted. Studies on forming coating films by adding a curing agent to a solution of the obtained silicone oligomer have also been actively conducted.

For example, in Japanese Patent Application Laid-Open No. Showa 63(1988)-117074, a coating composition containing a condensate of an organotrialkoxysilane, colloidal silica, water, a hydrophilic organic solvent and, where necessary, a silane coupling agent based on an amine as the curing agent is proposed as a coating composition which exhibits excellent storage stability and forms a coating film having a high hardness and exhibiting excellent physical properties on the surface of metal, ceramic and glass. In Japanese Patent Application Laid-Open No. Showa 63(1988)-137972, a coating composition containing a condensate of an organotrialkoxysilane, colloidal silica, water, a hydrophilic organic solvent and a curing agent selected from a heterocyclic compounds having 2 or 3 nitrogen atoms, an aluminum alkoxide and a chelate compound of aluminum with a β-diketone is proposed. However, coating films obtained from these coating compositions have a drawback in that resistance to boiling water is poor since bonds having a great strain tend to remain in the polysiloxane skeleton structure.

In Japanese Patent Application Laid-Open No. Heisei 6(1994)-199528, a technology in which a hydrolyzable organometallic compound is hydrolyzed and condensed with dehydration by using a halogen ion as the catalyst in the presence of boron ion while pH is adjusted to 4.5 to 5.0 and the obtained product is applied to a substrate to form a glass coating film is disclosed. However, the glass coating film obtained in accordance with the above process has a drawback in that resistance to boiling water is poor.

A process for synthesizing a ladder polymer stable at 250°C from phenylsilsesquioxane ([C₆H₅SiO_{3/2}]ₙ) using potassium hydroxide as the catalyst is known (J. F. Brown, Jr. et al., J. Am. Chem. Soc., 1960, Volume 82, Page 6194). However, this process has drawbacks in that the material is limited to phenylsilsesquioxane and that the amount of silanol group necessary for curing the film at the ordinary temperature and for adhesion of the film with the interface is small.

Heretofore, it is known that an organoalkoxysilane can be hydrolyzed by using a strong acid as the catalyst. However, when methylsilsesquioxane ([CH₃SiO_{3/2}]ₙ) is synthesized by hydrolysis and polycondensation of a methyltrialkoxysilane in the presence of an acid catalyst, the octamer tends to be formed as precipitates and it is difficult that a stable solution of an oligomer suited for a coating material is prepared (Z. Zhang et al., J. Non-Cryst. Solids, 1995, Volume 189, Page 212).

Therefore, development of a coating composition in which a silicone oligomer obtained by hydrolysis and polycondensation of an alkoxysilane can be rearranged into a polysiloxane skeleton structure having no strain in the bonds during the formation of a coating film and, at the same time, the curing can be promoted has been desired.

The present invention has an object of providing a coating composition which can form a coating film of an organopolysiloxane having excellent chemical durability such as water resistance and resistance to boiling water from a solution comprising a silicone oligomer which is obtained by hydrolysis and polycondensation of an alkoxysilane.

### DISCLOSURE OF THE INVENTION

As the result of intensive studies by the present inventors to overcome the above drawbacks, it was found that a coating film of an organopolysiloxane exhibiting excellent water resistance, resistance to boiling water and acid resistance could be obtained when a curing catalyst working as a latently acidic catalyst during formation of a coating film was added to a solution containing a silicone oligomer prepared by hydrolysis and polycondensation of an alkoxysilane. The present invention has been completed based on the knowledge.

The present invention provides:
(1) A coating composition which comprises:
   as component (A), a solution comprising a silicone oligomer having an average structural unit represented by:

      R¹ ₙSiO_{x/2}(OH)_{y}(OR²)_{z}

      wherein R¹ represents an alkyl group having 1 to 3 carbon atoms, vinyl group or phenyl group, a plurality of R¹ may represent a same group or difference groups when the plurality of R¹ are present, R² represents an alkyl group having 1 to 3 carbon atoms, a plurality of R² may represent a same group or different groups when the plurality of R² are present and n, x, y and z represent numbers satisfying relations of: 0.8≦n≦1.7, 2<x<3.2, y>0, z>0 and y+z=4-n-x; and
   as component (B), a latently acidic catalyst;
(2) A coating composition described in (1), wherein the silicone oligomer in component (A) is prepared by hydrolysis and polycondensation of an alkoxysilane using a metal chelate compound as a catalyst;
(3) A coating composition described in (2), wherein a ligand in the metal chelate compound is at least one compound selected from β-diketones and polyethers having a large ring;
(4) A coating composition described in (1), wherein the silicone oligomer in component (A) is prepared by hydrolysis and polycondensation of an alkoxysilane which is conducted by adding to the alkoxysilane, as a self-catalyst, a solution comprising a silicon compound which is soluble in a hydrophilic organic solvent and has an average structural unit represented by:

   R³ ₐSiO_{b/2}(OH)_{c}(OR⁴)_{d}

   wherein R³ represents an alkyl group having 1 to 3 carbon atoms, vinyl group or phenyl group, a plurality of R³ may represent a same group or difference groups when the plurality of R³ are present, R⁴ represents an alkyl group having 1 to 3 carbon atoms, a plurality of R⁴ may represent a same group or different groups when the plurality of R⁴ are present and a, b, c and d represent numbers satisfying relations of: 0≦a<3, 0<b<4, c>0, d ≧0 and c+d=4-a-b;
(5) A coating composition described in (1), wherein component (B) comprises:
   a compound selected from compounds represented by:

      M¹(Che)ₚ(OR⁵)_{q}

      wherein M¹ represents a metal having a valence of 3 or greater, Che represents a chelating agent, R⁵ represents an alkyl group having 1 to 4 carbon atoms and p and q represent numbers satisfying relations of: p≧0, q≧0 and p+q≧3, and products of partial hydrolysis of the compounds; and
   an acid having a logarithmic value of inverse of an acid dissociation constant in an aqueous solution (pKa) of 3 or smaller and represented by:

      HᵣA

      wherein A represents a conjugate base and r represents an absolute value of a number of charge of the conjugate base represented by A;
(6) A coating composition described in (1), wherein component (B) comprises a compound having a bond represented by:

   M¹-A

   wherein M¹ represents a metal having a valence of 3 or greater and A represents a conjugate base of an acid having a logarithmic value of inverse of an acid dissociation constant in an aqueous solution (pKa) of 3 or smaller;
(7) A coating composition described in (1), wherein component (B) comprises at least one compound selected from compounds represented by:

   SiX¹ ₁R⁶ ₄₋₁

   wherein X¹ represents Cl, Br, I, CH₃COO or SCN, R⁶ represents hydrogen atom or an alkyl group having 1 to 4 carbon atoms and 1 represents a number of 1, 2, 3 or 4; esters of carboxylic acids, esters of nitric acid, dialkyl sulfates, δ-lactones, acid anhydrides, acid chlorides and sulfonyl compounds;
(8) A coating composition described in any one of (6) and (7), wherein component (B) comprises a compound selected from compounds represented by:

   M¹(Che)ₚ(OR⁵)_{q}

   wherein M¹ represents a metal having a valence of 3 or greater, Che represents a chelating agent, R⁵ represents an alkyl group having 1 to 4 carbon atoms and p and q represent numbers satisfying relations of: p≧0, q≧0 and p+q≧3, and products of partial hydrolysis of the compounds;
(9) A coating composition described in any one of (5), (6) and (8), wherein M¹ represents a metal selected from Al³⁺, Ga³⁺, In³⁺, La³⁺, Fe³⁺, Y³⁺, Eu³⁺, Ti⁴⁺ and Zr⁴⁺;
(10) A coating composition described in any one of (5) and (6), wherein A represents at least one base selected from SO₄²⁻, HSO₄⁻, NO₃⁻, Cl⁻, Br⁻, I⁻, SCN⁻, CH₃₋ₘX²ₘCOO⁻, X² representing an atom or a group selected from F, Cl, Br and CN and m representing a number of 1, 2 or 3, and CH₃COCOO⁻; and
(11) A coating composition described in any one of (5) and (8), wherein the chelating agent is a compound seleted from β-diketones.

### THE MOST PREFERRED EMBODIMENT TO CARRY OUT THE INVENTION

The coating composition of the present invention comprises, as component (A), a solution comprising a silicone oligomer having an average structural unit represented by:

R¹ ₙSiO_{x/2}(OH)_{y}(OR²)_{z}

and, as component (B), a latently acidic catalyst. In the above formula, R¹ represents an alkyl group having 1 to 3 carbon atoms, vinyl group or phenyl group, a plurality of R¹ may represent a same group or difference groups when the plurality of R¹ are present, R² represents an alkyl group having 1 to 3 carbon atoms, a plurality of R² may represent a same group or different groups when the plurality of R² are present and n, x, y and z represent numbers satisfying relations of: 0.8≦n≦1.7 and preferably 1≦ n≦1.3, 2<x<3.2 and preferably 2<x<3, y>0, z>0 and y+z=4-n-x. The average structural unit means a structural unit of a silicone oligomer averaged and expressed based on one Si atom.

In the solution comprising the silicone oligomer having an average structural unit represented by R¹ₙSiO_{x/2}(OH)_{y}(OR²)_{z}, which is used in the composition of the present invention as component (A), when the number represented by n is smaller than 0.8, the relaxation of stress in the stage of drying the coating film tends to become difficult and there is the possibility that cracks are formed in the coating film. When the number represented by n exceeds 1.7, the formation of a three-dimensional network structure tends to become difficult and there is the possibility that mechanical properties of the coating film deteriorate. When the number represented by x is smaller than 2, the formation of a linear polymer tends to become difficult and there is the possibility that the amount of volatile component increases. When the number represented by x exceeds 3.2, the relaxation of stress in the stage of drying the coating film tends to become difficult and there is the possibility that cracks are formed in the coating film. When a coating film is formed on a substrate, a curing agent is added before the coating composition is applied. Since hydroxyl group in the silicone oligomer provides the crosslinking point in the crosslinking by the working of the curing agent, the presence of hydroxyl group, i.e., y>0, is essential. The presence of the alkoxyl group represented by OR², i.e., z>0, is essential for maintaining the storage stability of the solution before the addition of the curing agent.

The alkoxysilane used for preparing component (A) is not particularly limited. Examples of the alkoxysilane include tetraalkoxysilanes such as tetramethoxysilane (TMOS) and tetraethoxysilane (TEOS); trialkoxysilanes such as methyltrimethoxysilane (MTMS), methyltriethoxysilane (MTES), ethyltrimethoxysilane (ETMS), phenyltriethoxysilane (PhTES), vinyltriethoxysilane (VTES), n-propyltrimethoxysilane (n-PrTMS) and isopropyltrimethoxysilane (iso-PrTMS); dialkoxysilanes such as dimethyldiethoxysilane (DMDE), diphenyldimethoxysilane (DPhDM) and methylethyldimethoxysilane (MEDM); and monoalkoxysilanes such as trimethylmethoxysilane (TMMS).

In the preparation of component (A) used in the present invention, it is preferable that water and the alkoxysilane are mixed in amounts such that the ratio of the amounts by mole H₂O/Si is in the range of 1.4 to 4.0 and more preferably in the range of 1.5 to 2.5 and the hydrolysis and the polycondensation are conducted. When the ratio of the amounts by mole H₂O/Si is smaller than 1.5, there is the possibility that the unreacted alkoxyl group is left remaining in a great amount in the preparation of the solution comprising a silicone oligomer and the amount of the oligomer having high molecular weights decreases. Therefore, there is the possibility that mechanical property of the coating film are adversely affected. When the ratio of the amounts by mole H₂O/Si exceeds 4.0, there is the possibility that stability of the solution comprising a silicone oligomer deteriorates. Moreover, water tends to be condensed on the surface during the spray coating and there is the possibility that formation of a uniform coating film becomes difficult during the film formation. When the ratio of the amounts by mole H₂O/Si is adjusted within the range of 1.4 to 4.0, a portion of the alkoxyl group remains and the effect of improving stability of the solution of a silicone oligomer of component (A) is exhibited.

In the preparation of component (A) of the composition of the present invention, it is preferable that a metal chelate compound or an acid is used as the catalyst for the hydrolysis. The metal chelate compound exhibits not only the catalytic effect on the hydrolysis of alkoxysilane but also the effect of suppressing separation of crystals when a methyltrialkoxysilane is used in a great amount as the raw material. Moreover, the metal chelate compound exhibits the effect of directing the propagation of polycondensation more linearly by promoting deprotonation of the silanol in addition to the catalytic effect on the hydrolysis. Therefore, the obtained solution of a silicone oligomer exhibits excellent storage stability for a long time since the time before gelation is long and is advantageous for the formation of a coating film. When an acid catalyst is used, it is preferable that a metal chelate compound is used in combination. The metal chelate compound is not particularly limited. Metal chelate compounds having β-diketones having 1,3-dioxypropylene chain or cyclic polyethers having a large ring as the ligands can be preferably used. The type of the metal ion is not particularly limited. Metal ions having a great constant of complex formation with the ligand are preferably used.

Examples of the metal chelate compound include metal chelate compounds of β-diketones such as tris(acetylacetonato)aluminum(III), tris(ethyl acetoacetato)aluminum(III), tris(diethyl malonato)aluminum-(III), bis(acetylacetonato)copper(II), tetrakis(acetylacetonato)zirconium-(IV), tris(acetylacetonato)chromium(III), tris(acetylacetonato)cobalt(III) and titamum(II) oxyacetylacetonate [(CH₃COCHCOCH₃)₂TiO]; metal chelate compounds of β-diketones with rare earth metals; and metal chelate compounds of cyclic polyethers having a large ring such as 18-crown-6-potassium chelate compound salts, 12-crown-4-lithium chelate compound salts and 15-crown-5-sodium chelate compound salts.

The amount of the metal chelate compound is not particularly limited and can be suitably selected in accordance with the catalytic effect. In general, it is preferable that the amount is 0.001 to 5% by mole and more preferably 0.005 to 1% by mole based on the amount of the alkoxysilane. When the amount of the metal chelate compound used as the catalyst is less than 0.001% by mole based on the amount of the alkoxysilane, there is the possibility that the catalytic effect on the hydrolysis is not sufficiently exhibited. When the amount of the metal chelate compound exceeds 5% by mole based on the amount of the alkoxysilane, there is the possibility that the metal chelate compound is precipitated during the formation of a coating film and the properties of the coating film are adversely affected. When a self-catalyst is used, the amount of the metal chelate compound include the amount of the metal chelate compound derived from the self-catalyst.

In the preparation of component (A) of the composition of the present invention, the alkoxysilane may be hydrolyzed and polycondensed by using a solution comprising a silicon compound which has an average structural unit represented by R³ₐSiO_{b/2}(OH)_{c}(OR⁴)_{d} and is soluble in a hydrophilic organic solvent as a self catalyst. In the formula, R³ represents an alkyl group having 1 to 3 carbon atoms, phenyl group or vinyl group, a plurality of R³ may represent the same group or different groups when the plurality of R³ are present, R⁴ represents an alkyl group having 1 to 3 carbon atoms, a plurality of R⁴ may represent the same group or different groups when the plurality of R⁴ are present and a, b, c and d represent numbers satisfying relations of: 0≦a<3 and preferably 0.8≦a<2, 0<b<4 and preferably 1<b<3, c>0, d≧0 and c+d=4-a-b. The average structural unit means a structural unit of a silicon compound averaged and expressed based on one Si atom. When the number represented by a exceeds 3, the above silicon compound tends to be vaporized and there is the possibility that the silicon compound is condensed and deactivated. When the number represented by c is greater than 0, i.e., when the hydroxyl group is present, the hydrolysis of the alkoxysilane with water is promoted and polycondensation is also promoted due to protonation of the alkoxysilane with proton in the silanol. The silicone oligomer in the obtained solution of a silicone oligomer can be, by itself, the above silicon compound having the above average structural unit represented by R³ₐSiO_{b/2}(OH)_{c}(OR⁴)_{d}. Therefore, this type of the catalyst is defined as a self-catalyst. It is preferable that the added amount of the self-catalyst is in the range of 0.1 to 50% by weight and more preferably in the range of 1 to 40% by weight based on the amount of the alkoxysilane. When the added amount of the self-catalyst is less than 0.1% by weight based on the amount of the alkoxysilane, the amount of transfer of proton is small and there is the possibility that the efficiency of the hydrolysis decreases. When the added amount of the self-catalyst exceeds 50% by weight based on the amount of the alkoxysilane, the amount of the silicone oligomer derived from the self-catalyst increases in the solution of the silicone oligomer obtained by the reaction and there is the possibility that the efficiency of production of the silicone oligomer decreases. Moreover, there is the possibility that the quality of the obtained solution of the silicone oligomer becomes unstable.

When the solution of the self-catalyst is prepared from the alkoxysilane, it is preferable that at least one of acids and metal chelate compounds is added as the catalyst. As the acid, an acid conventionally used in the ordinary sol-gel reaction can be used. Examples of the acid include inorganic acids such as nitric acid and hydrochloric acid and organic acids such as acetic acid. In the preparation of the solution of the silicone oligomer in the present invention, when the self-catalyst is added in a great amount, it is preferable that a metal chelate compound is used as the catalyst since there is the possibility that storage stability of the solution deteriorates when the acid catalyst is used in the above preparation.

A fresh solution of the self-catalyst can be prepared by further hydrolyzing and polycondensing the alkoxysilane using the solution of the self-catalyst obtained above as the catalyst. In this case, it is more preferable that a metal chelate compound is used in combination as the catalyst.

The alkoxysilane used for the preparation of the solution of the self-catalyst is not particularly limited. Examples of the alkoxysilane include tetraalkoxysilanes such as tetramethoxysilane (TMOS) and tetraethoxysilane (TEOS); trialkoxysilanes such as methyltrimethoxysilane (MTMS), methyltriethoxysilane (MTES), ethyltrimethoxysilane (ETMS), phenyltriethoxysilane (PhTES), vinyltriethoxysilane (VTES), n-propyltrimethoxysilane (n-PrTMS) and isopropyltrimethoxysilane (iso-PrTMS); dialkoxysilanes such as dimethyldiethoxysilane (DMDE), diphenyldimethoxysilane (DPhDM) and methylethyldimethoxysilane (MEDM); and monoalkoxysilanes such as trimethylmethoxysilane (TMMS).

The catalyst of a metal chelate compound used for preparation of the solution of the self-catalyst is not particularly limited. Metal chelate compounds having β-diketones or cyclic polyethers having a large ring as the ligands can be preferably used. The type of the metal ion is not particularly limited. Metal ions having a great constant of complex formation with the ligand can be preferably used. Examples of the metal chelate compound include metal chelate compounds of β-diketones such as tris(acetylacetonato)aluminum(III), tris(ethyl acetoacetato)aluminum(III), tris(diethyl malonato)aluminum(III), bis(acetylacetonato)copper(II), tetrakis(acetylacetonato)zirconium(IV), tris(acetylacetonato)chromium(III), tris(acetylacetonato)cobalt(III) and titanium(II) oxyacetylacetonate [(CH₃COCHCOCH₃)₂TiO]; metal chelate compounds of β-diketones with rare earth metals; and metal chelate compounds of cyclic polyethers having a large ring such as 18-crown-6-potassium chelate compound salts, 12-crown-4-lithium chelate compound salts and 15-crown-5-sodium chelate compound salts.

The amount of the catalyst of the metal chelate compound added in the preparation of the solution of the self-catalyst is not particularly limited and can be suitably selected in accordance with the catalytic effect. In general, it is preferable that the amount is 0.001% by mole or more and more preferably 0.005% by mole or more based on the amount of the alkoxysilane. When the amount of the metal chelate compound is less than 0.001% by mole based on the amount of the alkoxysilane, there is the possibility that the catalytic effect on the hydrolysis is not sufficiently exhibited. There is no upper limit in the amount of the catalyst of the metal chelate compound based on the amount of the alkoxysilane as long as the metal chelate compound is homogeneously dissolved.

In the composition of the present invention, a major portion of the solvent of the solution comprising a silicone oligomer of component (A) is the alcohol formed by the hydrolysis of the alkoxysilane. Preparation of the solution comprising a silicone oligomer which is stable and has a high concentration of solid substances is made possible by utilizing the alcohol formed by the hydrolysis without adding other solvents. In the composition of the present invention, the molecular weight of the silicone oligomer is not particularly limited. A silicone oligomer having a high molecular weight can be used as long as the silicone oligomer formed by hydrolysis and polycondensation of the alkoxysilane is dissolved into the alcohol formed simultaneously and a homogeneous solution is formed.

The latently acidic catalyst used as component (B) in the present invention is a catalyst which generates an acid after being mixed into the solution comprising a silicone oligomer of component (A). In the solution comprising a silicone oligomer or a formed coating film, the catalyst slowly converts the system into an acidic condition or slowly enhances the acidity of the system as the reaction with water, an alcohol or a silanol proceeds. The catalyst rearranges siloxane bonds having great stress into more stable siloxane skeleton structures while promoting polycondensation of the siloxane:

Si-OH + HO-Si Si-O-Si + H₂O

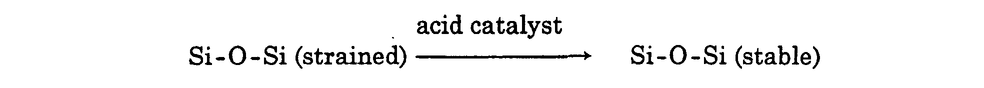

The stable siloxane skeleton structure is reinforced by the above rearrangement and a coating film exhibiting excellent chemical durability such as water resistance, resistance to boiling water and acid resistance can be obtained.

The latently acidic catalyst used in the present invention is not particularly limited. Examples of the latently acidic catalyst include:
latently acidic catalysts comprising:
a compound selected from compounds represented by M¹(Che)ₚ(OR⁵)_{q}, wherein M¹ represents a metal having a valence of 3 or greater, Che represents a chelating agent, R⁵ represents an alkyl group having 1 to 4 carbon atoms and p and q represent numbers satisfying relations of: p≧0, q≧0 and p+q≧3, and products of partial hydrolysis of the compounds, and
an acid having a logarithmic value of inverse of an acid dissociation constant in an aqueous solution (pKa) of 3 or smaller and represented by HᵣA, wherein A represents a conjugate base and r represents an absolute value of a number of charge of the conjugate base represented by A;
latently acidic catalysts comprising a compound having a bond represented by M¹-A, wherein M¹ represents a metal having a valence of 3 or greater and A represents a conjugate base of an acid having a logarithmic value of inverse of an acid dissociation constant in an aqueous solution (pKa) of 3 or smaller;
latently acidic catalysts comprising at least one compound selected from compounds represented by SiX¹₁R⁶₄₋₁, wherein X¹ represents Cl, Br, I, CH₃COO or SCN, R⁶ represents an alkyl group having 1 to 4 carbon atoms and 1 represents a number of 1, 2, 3 or 4, esters of carboxylic acids, esters of nitric acid, dialkyl sulfates, δ-lactones, acid anhydrides, acid chlorides and sulfonyl compounds;
latently acidic catalysts comprising the above compound having a bond represented by M¹-A and the above compound selected from compounds represented by M¹(Che)ₚ(OR⁵)_{q} and products of partial hydrolysis thereof; and
latently acidic catalysts comprising at least one compound selected from compounds represented by SiX¹₁R⁶₄₋₁, esters of carboxylic acids, esters of nitric acid, dialkyl sulfates, δ-lactones, acid anhydrides, acid chlorides and sulfonyl compounds described above and the above compound selected from compounds represented by M¹(Che)ₚ(OR⁵)_{q} and products of partial hydrolysis thereof.

In the above compound selected from compounds represented by M¹(Che)ₚ(OR⁵)_{q} and products of partial hydrolysis thereof which is used for the latently acidic catalyst, the metal ion having a valence of 3 or greater which is represented by M¹ is not particularly limited. A metal ion exhibiting excellent buffering effect is preferable so that the siloxane bonds can be rearranged even in the coating film in which the curing proceeds. Examples of the metal ion include Al³⁺, Ga³⁺, In³⁺, La³⁺, Fe³⁺, Y³⁺, Eu³⁺, Ti⁴⁺ and Zr⁴⁺. Al³⁺, Ti⁴⁺ and Zr⁴⁺ are preferable among these ions. As the product of partial hydrolysis of the above compound, not only products in which a portion of the alkoxyl group represented by OR⁵ is converted into hydroxyl group OH but also products of partial hydrolysis which are converted into polynuclear complexes by condensation can be used. The plurality of metal ions represented by M¹ in the polynuclear complexes may be the same with or different from each other.

Examples of the alkoxyl group represented by OR⁵ which is the reactive functional group include methoxyl group, ethoxyl group, n-propoxyl group, isopropoxyl group, n-butoxyl group, sec-butoxyl group and tert-butoxyl group. In the compound represented by M¹(Che)ₚ(OR⁵)_{q}, it is not always necessary that the alkoxyl group represented by OR⁵ is present. When q represent a number greater than zero, i.e., when the alkoxyl group represented by OR⁵ is present, the condensation with dehydration of the silicone oligomer is promoted by hydrolysis. It is more preferable that q is 2 or greater. When the number of the reactive alkoxyl group represented by OR⁵ is 2 or greater, the latently acidic catalyst exhibits the effect of slowly converting the system into an acidic condition or slowly enhancing the acidity of the system and a further effect of the catalyst itself working as the crosslinking agent. It is not always necessary that the chelating agent represented by Che is present. When p represents a number greater than zero, i.e., when the chelating agent is present, stability of the latently acidic catalyst is improved and handling of the catalyst is facilitated. It is more preferable that p represents a number of 1 or greater. The chelating agent represented by Che is not particularly limited. β-Diketones are preferable as the chelating agent. Examples of the β-diketone include acetylacetone, ethyl acetoacetate and diethyl malonate.

The acid represented by HᵣA used for the latently acidic catalyst is a strong acid having a logarithmic value of inverse of an acid dissociation constant in an aqueous solution (pKa) of 3 or smaller. In the above formula, A represents a conjugate base and r represents the absolute value of the number of charge of the conjugate base represented by A. It is considered that the acid reacts with the above compound selected from compounds represented by M¹(Che)ₚ(OR⁵)_{q} and products of partial hydrolysis thereof and, as the result, the metal ion represented by M¹ and the conjugate base represented by A and/or the chelating agent represented by Che and proton are brought into a condition such that these species have some interaction with each other. It is further considered that, when the latently acidic catalyst comprising the compound selected from compounds represented by M¹(Che)ₚ(OR⁵)_{q} and products of partial hydrolysis thereof and the acid represented by HᵣA and the solution comprising a silicone oligomer of component (A) are mixed together, the above interaction is lost due to water or silanol in component (A) and the function of the latently acidic catalyst is exhibited. The conjugate base represented by A in the acid represented by HᵣA is not particularly limited. Examples of the conjugate base include SO₄²⁻, HSO₄⁻, NO₃⁻, Cl⁻, Br⁻, I⁻, SCN⁻, CH₃₋ₘX²ₘCOO⁻ and CH₃COCOO⁻. In the formula, X² represents an atom or group selected from F, Cl, Br and CN, and m represents a number of 1, 2 or 3. When pKa of the conjugate base exceeds 3, the strength of the generated acid is insufficient and there is the possibility that resistance to boiling water of the coating film deteriorates. The ratio of the amount by mole of the metal ion represented by M¹ to the amount by mole of the conjugate base represented by A is not particularly limited. It is preferable that 0.001≦ A/M¹≦2 (the ratio of the amounts by mole) and more preferably 0.01≦ A/M¹≦1.5 (the ratio of the amounts by mole). Siloxane bonds having great strain in the solution comprising a silicone oligomer or in the formed coating film are rearranged and more stable siloxane skeleton structures can be formed. When the ratio of the amounts by mole A/M¹ is smaller than 0.001, the amount of the generated acid is insufficient and there is the possibility that resistance to boiling water deteriorates. When the ratio of the amounts by mole A/M¹ exceeds 2, the acidity of the solution increases and there is the possibility that the properties of the coating film and the coated substrate are adversely affected.

The latently acidic catalyst comprising the compound selected from compounds represented by M¹(Che)ₚ(OR⁵)_{q} and products of partial hydrolysis thereof and the acid represented by HᵣA can be prepared by reacting an alkoxide material and an acid which are commercially available in the presence or in the absence of a chelating agent. Where necessary, a small amount of water may be added during the preparation. As the component of hydrochloric acid or hydrobromic acid, a gas of hydrochloric acid or a gas of hydrobromic acid may be used.

In the present invention, the compound having a bond represented by M¹-A which is used for the latently acidic catalyst is a compound having a metal represented by M¹ and a conjugate base represented by A such as those described above. When this compound is solid at the ordinary temperature, the compound can be used after being dissolved into an organic solvent. Examples of the above compound include titanium chloride, titanium bromide, aluminum chloride, aluminum bromide, aluminum nitrate, Al(CH₃COCHCOCH₃)Cl₂, iron chloride and indium nitrate.

Similarly to the above case, it is considered that, when the compound having a bond represented by M¹-A is mixed with the solution comprising a silicone oligomer of component (A), the bond between the metal represented by M¹ and the conjugate base represented by A is lost by nucleophilic attack of water or a silanol and the function of the latently acidic catalyst is exhibited.

In the present invention, examples of the silicon compound represented by SiX¹₁R⁶₄₋₁ (X¹ represents Cl, Br, I, CH₃COO or SCN, R⁶ represents an alkyl group having 1 to 4 carbon atoms and 1 represents a number of 1, 2, 3 or 4) used as the latently acidic catalyst include silicon tetrachloride, silicon tetrabromide, silicon tetraiodide, trichlorosilane, tribromosilane, triidosilane, silicon tetraacetate, chlorotrimethylsilane, trichloromethylsilane, bromotrimethylsilane and dichlorodimethylsilane. Examples of the ester of carboxylic acid used as the latently acidic catalyst include methyl acetate, ethyl acetate, ethyl trichloroacetate, ethyl formate, ethyl chloroformate and ethyl pyruvate.

Examples of the ester of nitric acid used as the latently acidic catalyst include methyl nitrate and ethyl nitrate. Examples of the dialkyl sulfate used as the latently acidic catalyst include dimethyl sulfate and diethyl sulfate. Examples of the δ-lactone used as the latently acidic catalyst include coumarine and δ-valerolactone. Examples of the acid anhydride used as the latently acidic catalyst include acetic anhydride and propionic anhydride. Examples of the acid chloride used as the latently acidic catalyst include acetyl chloride and chloroacetyl chloride. Examples of the sulfonyl compound used as the latently acidic catalyst include methane sulfonyl chloride, benzene sulfonyl chloride. Similarly to the above cases, these compounds slowly converts the system into an acidic condition or slowly enhances the acidity of the system as the reaction with water or an alcohol proceeds in the solution comprising a silicone oligomer or in the formed coating film and the function of the latently acidic catalyst is exhibited. As the result, siloxane bonds having great strain are rearranged and more stable siloxane skeleton structures are formed.

In the composition of the present invention, when the compound having the bond represented by M¹-A or at least one compound selected from the compounds represented by SiX¹₁R⁶₄₋₁, the esters of carboxylic acids, the esters of nitric acid, the dialkyl sulfates, the δ-lactones, the acid anhydrides, the acid chlorides and the sulfonyl compounds is used, the compound selected from compounds represented by M¹(Che)ₚ(OR⁵)_{q} and products of partial hydrolysis thereof may be further added and the obtained mixture can be used as the latently acidic catalyst. By adding the compound selected from compounds represented by M¹(Che)ₚ(OR⁵)_{q} and products of partial hydrolysis thereof, the rate of drying the coating film can be increased so that the coating layer can be touched by hands.

In the coating composition of the present invention, it is preferable that the amount of the acid which can be generated by addition of component (B) to component (A) as expressed by the amount of the acid represented by HᵣA is in the range of 0.001 to 10 parts by weight per 100 parts by weight of the solid component in component (A). When the generated amount of the acid as expressed by the amount of the acid represented by HᵣA is smaller than 0.001 part by weight per 100 parts by weight of the solid component in component (A), the effect of the latently acidic catalyst is insufficient and there is the possibility that the physical properties such as resistance to boiling water deteriorate. When the generated amount of the acid as expressed by the amount of the acid represented by HᵣA exceeds 10 parts by weight per 100 parts by weight of the solid component in component (A), the properties of the coating film formed by the coating composition obtained by mixing component (A) and component (B) and the properties of the substrate are adversely affected.

To improve the physical properties of the coating film obtained from the coating composition of the present invention, an oxide sol using an organic solvent as the dispersing medium such as a silica sol, an antimony oxide sol and an alumina sol may be added to the solution comprising a silicone oligomer. Inorganic pigments having good weatherability may be used by dispersing into the solution comprising a silicone oligomer. Examples of the inorganic pigment include oxides such as titanium oxide, iron oxide, alumina, zinc oxide, titanium yellow, cobalt blue and kaolin. Where necessary, materials having a needle shape such as glass fiber and wiskers and materials having a powder shape such as carbon black may be added. When a pigment is added to the solution comprising a silicone oligomer in a great amount, a hydrophilic organic solvent in an amount less than 50 parts by weight per 100 parts by weight of the alkoxysilane used as the raw material may be added to the solution comprising a silicone oligomer in combination with the formed alcohol and the dispersion medium in the oxide sol. When the amount of the hydrophilic organic solvent is 50 parts by weight or more per 100 parts by weight of the alkoxysilane, the amount of volatile components increases and there is the possibility that economic disadvantage arises. It is preferable that the amount of the hydrophilic organic solvent is 20 parts by weight or less per 100 parts by weight of the alkoxysilane used as the raw material. The hydrophilic organic solvent is not particularly limited. As the hydrophilic organic solvent, solvents having low boiling points and easily vaporized such as methanol, ethanol, 1-propanol, 2-propanol and acetone can be preferably used. In the preparation of the solution comprising a silicone oligomer used in the present invention, the hydrophilic organic solvent means an organic solvent which is compatible with water in any desired relative amounts at the ordinary temperature.

When a coating film of the organopolysiloxane is formed from the coating composition of the present invention, the process for application of the coating composition is not particularly limited and any conventional coating process can be selected in accordance with the shape of the coated article and the object of the coating. For example, any of the spray coating process, the dipping coating process, the flow coating process and the roll coating process can be selected. The thickness of the coating film can be suitably selected in accordance with the object of coating. In general, it is preferable that the thickness is in the range of 1 to 50 µm. The coating composition of the present invention is applied to inorganic substrates such as metal, glass, ceramic and concrete and organic substrates such as acrylic resins, ABS resins, wood and paper to form a coating film of the organopolysiloxane. The surface of the substrates is protected and the excellent appearance can be enhanced. The coating film can also be used as an intermediate layer disposed between a photocatalytic film and a substrate.

To increase the hardness of the coating film formed with the coating composition of the present invention, the coating film which is formed and dried can be treated by heating at a temperature in the range of the room temperature to 400°C and preferably in the range of 80 to 200°C. When the temperature exceeds 400°C, the coating film is degraded due to decomposition of organic groups and there is the possibility that the physical properties of the coating film deteriorates.

### EXAMPLES

The present invention will be described more specifically with reference to examples in the following. However, the present invention is not limited to the examples.

### Preparation Example 1 (Preparation of a solution of a silicone oligomer)

To a mixed solution prepared from 178 parts by weight of methyltriethoxysilane [manufactured by SHIN-ETSU CHEMICAL Co., Ltd.; LS-1890] and 45 parts by weight of ethanol, 0.1 part by weight of tris(acetylacetonato)aluminum(III) [manufactured by DOJIN KAGAKU KENKYUSHO Co., Ltd.] was added. The resultant solution was stirred at the room temperature for 30 minutes and tris(acetylacetonato)-aluminum(III) was dissolved. To the obtained solution, 32 parts by weight of distilled water was added over 1 hour under stirring. The resultant solution was left standing at the room temperature for 1 day and a transparent solution of a silicone oligomer A-1 was obtained. The solid content of the solution of a silicone oligomer was about 26% by weight.

### Preparation Example 2 (Preparation of a solution of a silicone oligomer)

To 178 parts by weight of methyltriethoxysilane [manufactured by SHIN-ETSU CHEMICAL Co., Ltd.; LS-1890], 50 parts by weight of the solution A-1 as the self-catalyst was added and, then, 0.1 part by weight of tris(acetylacetonato)aluminum(III) [manufactured by DOJIN KAGAKU KENKYUSHO Co., Ltd.] was added. The resultant solution was stirred at the room temperature for 30 minutes and tris(acetylacetonato)-aluminum(III) was dissolved. To the obtained solution, 32 parts by weight of distilled water was added over 1 hour under stirring. The resultant solution was left standing at the room temperature for 1 day and a transparent solution of a silicone oligomer A-2 was obtained. The solid content of the solution of a silicone oligomer was about 31% by weight.

### Preparation Example 3 (Preparation of a solution of a silicone oligomer)

To a mixed solution prepared from 126 parts by weight of methyltriethoxysilane [manufactured by SHIN-ETSU CHEMICAL Co., Ltd.; LS-1890] and 45 parts by weight of phenyltrimethoxysilane [manufactured by SHIN-ETSU CHEMICAL Co., Ltd.; LS-2750], 50 parts by weight of the solution of a silicone oligomer A-2 as the self-catalyst was added and, then, 0.1 part by weight of tris(acetylacetonato)aluminum(III) [manufactured by DOJIN KAGAKU KENKYUSHO Co., Ltd.] was added. The resultant solution was stirred at the room temperature for 30 minutes and tris(acetylacetonato)aluminum(III) was dissolved. To the obtained solution, 33 parts by weight of distilled water was added over 1 hour under stirring. The resultant solution was left standing at the room temperature for 1 day and a transparent solution of a silicone oligomer A-3 was obtained. The solid content of the solution of a silicone oligomer was about 36% by weight.

### Preparation Example 4 (Preparation of a solution of a silicone oligomer)

To a mixed solution prepared from 130 parts by weight of methyltriethoxysilane [manufactured by SHIN-ETSU CHEMICAL Co., Ltd.; LS-1890] and 42 parts by weight of dimethyldiethoxysilane [manufactured by SHIN-ETSU CHEMICAL Co., Ltd.; LS-1370], 50 parts by weight of the solution of a silicone oligomer A-2 as the self-catalyst was added and, then, 0.1 part by weight of tris(acetylacetonato)aluminum(III) [manufactured by DOJIN KAGAKU KENKYUSHO Co., Ltd.] was added. The resultant solution was stirred at the room temperature for 30 minutes and tris(acetylacetonato)aluminum(III) was dissolved. To the obtained solution, 29 parts by weight of distilled water was added over 1 hour under stirring. The resultant solution was left standing at the room temperature for 1 day and a transparent solution of a silicone oligomer A-4 was obtained. The solid content of the solution of a silicone oligomer was about 35% by weight.

### Preparation Example 5 (Preparation of a latently acidic catalyst)

To 500 parts by weight of isopropanol, 100 parts by weight of titanium tetra-n-butoxide was added and, then, reacted with 29 parts by weight of acetylacetone. To the resultant solution, 7 parts by weight of concentrated hydrochloric acid was added and a latently acidic catalyst B-1 was obtained.

### Preparation Example 6 (Preparation of a latently acidic catalyst)

To 200 parts by weight of isopropanol, 50 parts by weight of aluminum tri-n-butoxide was added and, then, reacted with 20 parts by weight of acetylacetone. To the resultant solution, 22 parts by weight of concentrated hydrochloric acid was added and a latently acidic catalyst B-2 was obtained.

### Preparation Example 7 (Preparation of a latently acidic catalyst)

To 500 parts by weight of isopropanol, 100 parts by weight of titanium tetra-n-butoxide was added and, then, reacted with 29 parts by weight of acetylacetone. To the resultant solution, 5 parts by weight of concentrated sulfuric acid was added and a latently acidic catalyst B-3 was obtained.

### Preparation Example 8 (Preparation of a latently acidic catalyst)

To 500 parts by weight of acetone, a 80% by weight n-butanol solution containing 100 parts by weight of zirconium tetra-n-butoxide [manufactured by AZMAX Corporation] was added and, then, reacted with 21 parts by weight of acetylacetone. To the resultant solution, 2 parts by weight of trichloromethylsilane [manufactured by SHIN-ETSU CHEMICAL Co., Ltd.; LS-40] was added and a latently acidic catalyst B-4 was obtained.

### Preparation Example 9 (Preparation of a latently acidic catalyst)

To 500 parts by weight of acetone, a 80% by weight n-butanol solution containing 100 parts by weight of zirconium tetra-n-butoxide [manufactured by AZMAX Corporation] was added and, then, reacted with 21 parts by weight of acetylacetone. To the resultant solution, 6 parts by weight of ethyl trichloroacetate was added and a latently acidic catalyst B-5 was obtained.

### Preparation Example 10 (Preparation of a latently acidic catalyst)

To 500 parts by weight of isopropanol, 100 parts by weight of titanium tetra-n-butoxide was added and, then, reacted with 29 parts by weight of acetylacetone. To the resultant solution, 3 parts by weight of titanium tetrachloride was added and a latently acidic catalyst B-6 was obtained.

### Preparation Example 11 (Preparation of a latently acidic catalyst)

To 500 parts by weight of acetone, a 80% by weight n-butanol solution containing 100 parts by weight of zirconium tetra-n-butoxide [manufactured by AZMAX Corporation] was added and, then, reacted with 21 parts by weight of acetylacetone. To the resultant solution, 3 parts by weight of acetyl chloride was added and a latently acidic catalyst B-7 was obtained.

### Preparation Example 12 (Preparation of a curing agent)

To 500 parts by weight of acetone, a 80% by weight n-butanol solution containing 100 parts by weight of zirconium tetra-n-butoxide [manufactured by AZMAX Corporation] was added and, then, reacted with 21 parts by weight of acetylacetone and a curing agent C was obtained.

### Example 1

To 100 g of the solution of a silicone oligomer A-1, 10 g of the latently acidic catalyst B-1 was added and a coating composition was obtained. The obtained coating composition was applied to a glass substrate (the thickness: 2 mm) in accordance with the spray coating process and the formed coating film was dried at the room temperature for 2 hours and treated by heating at 120°C for 30 minutes. The obtained coating film had a thickness of about 14 µm and a pencil scratch value of 5H as measured in accordance with the method of Japanese Industrial Standard K 5400 8.4.2. This sample was dipped into boiling water for 2 hours and cooled in the air. Neither cracks nor whitening was found on the surface of the coating film.

### Example 2

To 100 g of the solution of a silicone oligomer A-2, 10 g of the latently acidic catalyst B-1 was added and a coating composition was obtained. The obtained coating composition was applied to a glass substrate (the thickness: 2 mm) in accordance with the spray coating process and the formed coating film was dried at the room temperature for 2 hours and treated by heating at 120°C for 30 minutes. The obtained coating film had a thickness of about 17 µm and a pencil scratch value of 5H as measured in accordance with the method of Japanese Industrial Standard K 5400 8.4.2. This sample was dipped into boiling water for 2 hours and rapidly cooled with tap water. Neither cracks nor whitening was found on the surface of the coating film.

### Example 3

To 100 g of the solution of a silicone oligomer A-2, 20 g of the latently acidic catalyst B-2 was added and a coating composition was obtained. The obtained coating composition was applied to a glass substrate (the thickness: 2 mm) in accordance with the spray coating process and the formed coating film was dried at the room temperature for 2 hours and treated by heating at 100°C for 30 minutes. The obtained coating film had a thickness of about 5 µm and a pencil scratch value of 5H as measured in accordance with the method of Japanese Industrial Standard K 5400 8.4.2. This sample was dipped into boiling water for 1 hour and cooled in the air. Neither cracks nor whitening was found on the surface of the coating film.

### Example 4

To 100 g of the solution of a silicone oligomer A-2, 10 g of the latently acidic catalyst B-3 was added and a coating composition was obtained. The obtained coating composition was applied to a glass substrate (the thickness: 2 mm) in accordance with the spray coating process and the formed coating film was dried at the room temperature for 2 hours and treated by heating at 150°C for 30 minutes. The obtained coating film had a thickness of about 7 µm and a pencil scratch value of 6H as measured in accordance with the method of Japanese Industrial Standard K 5400 8.4.2. This sample was dipped into boiling water for 2 hours and cooled in the air. Neither cracks nor whitening was found on the surface of the coating film.

### Example 5

To 100 g of the solution of a silicone oligomer A-2, 10 g of the latently acidic catalyst B-4 was added and a coating composition was obtained. The obtained coating composition was applied to a glass substrate (the thickness: 2 mm) in accordance with the spray coating process and the formed coating film was dried at the room temperature for 2 hours and treated by heating at 130°C for 30 minutes. The obtained coating film had a thickness of about 10 µm and a pencil scratch value of 5H as measured in accordance with the method of Japanese Industrial Standard K 5400 8.4.2. This sample was dipped into boiling water for 2 hours and cooled in the air. Neither cracks nor whitening was found on the surface of the coating film.

### Example 6

To 100 g of the solution of a silicone oligomer A-2, 10 g of the latently acidic catalyst B-5 was added and a coating composition was obtained. The obtained coating composition was applied to a glass substrate (the thickness: 2 mm) in accordance with the spray coating process and the formed coating film was dried at the room temperature for 2 hours and treated by heating at 140°C for 30 minutes. The obtained coating film had a thickness of about 5 µm and a pencil scratch value of 6H as measured in accordance with the method of Japanese Industrial Standard K 5400 8.4.2. This sample was dipped into boiling water for 2 hours and cooled in the air. Neither cracks nor whitening was found on the surface of the coating film.

### Example 7

To 100 g of the solution of a silicone oligomer A-2, 10 g of the latently acidic catalyst B-6 was added and a coating composition was obtained. The obtained coating composition was applied to a glass substrate (the thickness: 2 mm) in accordance with the spray coating process and the formed coating film was dried at the room temperature for 2 hours and treated by heating at 120°C for 30 minutes. The obtained coating film had a thickness of about 15 µm and a pencil scratch value of 5H as measured in accordance with the method of Japanese Industrial Standard K 5400 8.4.2. This sample was dipped into boiling water for 2 hours and rapidly cooled with tap water. Neither cracks nor whitening was found on the surface of the coating film.

### Example 8

To 100 g of the solution of a silicone oligomer A-3, 10 g of the latently acidic catalyst B-1 was added and a coating composition was obtained. The obtained coating composition was applied to a glass substrate (the thickness: 2 mm) in accordance with the spray coating process and the formed coating film was dried at the room temperature for 2 hours and treated by heating at 120°C for 30 minutes. The obtained coating film had a thickness of about 16 µm and a pencil scratch value of 5H as measured in accordance with the method of Japanese Industrial Standard K 5400 8.4.2. This sample was dipped into boiling water for 2 hours and rapidly cooled with tap water. Neither cracks nor whitening was found on the surface of the coating film.

### Example 9

To 100 g of the solution of a silicone oligomer A-4, 10 g of the latently acidic catalyst B-1 was added and a coating composition was obtained. The obtained coating composition was applied to a glass substrate (the thickness: 2 mm) in accordance with the spray coating process and the formed coating film was dried at the room temperature for 2 hours and treated by heating at 100°C for 30 minutes. The obtained coating film had a thickness of about 10 µm and a pencil scratch value of 3H as measured in accordance with the method of Japanese Industrial Standard K 5400 8.4.2. This sample was dipped into boiling water for 2 hours and cooled in the air. Neither cracks nor whitening was found on the surface of the coating film.

### Example 10

To 100 g of the solution of a silicone oligomer A-2, 10 g of the latently acidic catalyst B-7 was added and a coating composition was obtained. The obtained coating composition was applied to a glass substrate (the thickness: 2 mm) in accordance with the spray coating process and the formed coating film was dried at the room temperature for 2 hours and treated by heating at 140°C for 30 minutes. The obtained coating film had a thickness of about 5 µm and a pencil scratch value of 6H as measured in accordance with the method of Japanese Industrial Standard K 5400 8.4.2. This sample was dipped into boiling water for 2 hours and cooled in the air. Neither cracks nor whitening was found on the surface of the coating film.

### Comparative Example 1

To 100 g of the solution of a silicone oligomer A-2, 10 g of the curing agent C was added and a coating composition was obtained. The obtained coating composition was applied to a glass substrate (the thickness: 2 mm) in accordance with the spray coating process and the formed coating film was dried at the room temperature for 2 hours and treated by heating at 120°C for 30 minutes. The obtained coating film had a thickness of about 8 µm and a pencil scratch value of 4H as measured in accordance with the method of Japanese Industrial Standard K 5400 8.4.2. This sample was dipped into boiling water for 2 hours and pulled out into the air. Fine cracks were formed on the coating film.

### INDUSTRIAL APPLICABILITY

In the coating composition of the present invention, the solution comprising a silicone oligomer comprises the curing catalyst which works as the latently acidic catalyst during formation of the coating film. Therefore, siloxane bonds having a great strain are rearranged and more stable siloxane skeleton structures can be formed and the coating film exhibiting particularly excellent resistance to boiling water can be formed.

## Claims

1. A coating composition which comprises:
as component (A), a solution comprising a silicone oligomer having an average structural unit represented by:
R¹ ₙSiO_{x/2}(OH)_{y}(OR²)_{z}
wherein R¹ represents an alkyl group having 1 to 3 carbon atoms, vinyl group or phenyl group, a plurality of R¹ may represent a same group or different groups when the plurality of R¹ are present, R² represents an alkyl group having 1 to 3 carbon atoms, a plurality of R² may represent a same group or different groups when the plurality of R² are present and n, x, y and z represent numbers satisfying relations of: 0.8≦n≦1.7, 2<x<3.2, y>0, z>0 and y+z=4-n-x; and
as component (B), a latently acidic catalyst.

2. A coating composition according to Claim 1, wherein the silicone oligomer in component (A) is prepared by hydrolysis and polycondensation of an alkoxysilane using a metal chelate compound as a catalyst.

3. A coating composition according to Claim 2, wherein a ligand in the metal chelate compound is at least one compound selected from β-diketones and polyethers having a large ring.

4. A coating composition according to Claim 1, wherein the silicone oligomer in component (A) is prepared by hydrolysis and polycondensation of an alkoxysilane which is conducted by adding to the alkoxysilane, as a self-catalyst, a solution comprising a silicon compound which is soluble in a hydrophilic organic solvent and has an average structural unit represented by:
R³ ₐSiO_{b/2}(OH)_{c}(OR⁴)_{d}
wherein R³ represents an alkyl group having 1 to 3 carbon atoms, vinyl group or phenyl group, a plurality of R³ may represent a same group or difference groups when the plurality of R³ are present, R⁴ represents an alkyl group having 1 to 3 carbon atoms, a plurality of R⁴ may represent a same group or different groups when the plurality of R⁴ are present and a, b, c and d represent numbers satisfying relations of: 0≦a<3, 0<b<4, c>0, d ≧0 and c+d=4-a-b.

5. A coating composition according to Claim 1, wherein component (B) comprises:
a compound selected from compounds represented by:
M¹(Che)ₚ(OR⁵)_{q}
wherein M¹ represents a metal having a valence of 3 or greater, Che represents a chelating agent, R⁵ represents an alkyl group having 1 to 4 carbon atoms and p and q represent numbers satisfying relations of: p≧0, q≧0 and p+q≧3, and products of partial hydrolysis of the compounds; and
an acid having a logarithmic value of inverse of an acid dissociation constant in an aqueous solution (pKa) of 3 or smaller and represented by:
HᵣA
wherein A represents a conjugate base and r represents an absolute value of a number of charge of the conjugate base represented by A.

6. A coating composition according to Claim 1, wherein component (B) comprises a compound having a bond represented by:
M¹-A
wherein M¹ represents a metal having a valence of 3 or greater and A represents a conjugate base of an acid having a logarithmic value of inverse of an acid dissociation constant in an aqueous solution (pKa) of 3 or smaller.

7. A coating composition according to Claim 1, wherein component (B) comprises at least one compound selected from compounds represented by:
SiX¹ ₁R⁶ ₄₋₁
wherein X¹ represents Cl, Br, I, CH₃COO or SCN, R⁶ represents hydrogen atom or an alkyl group having 1 to 4 carbon atoms and 1 represents a number of 1, 2, 3 or 4, esters of carboxylic acids, esters of nitric acid, dialkyl sulfates, δ-lactones, acid anhydrides, acid chlorides and sulfonyl compounds.

8. A coating composition according to any one of Claims 6 and 7, wherein component (B) comprises a compound selected from compounds represented by:
M¹(Che)ₚ(OR⁵)_{q}
wherein M¹ represents a metal having a valence of 3 or greater, Che represents a chelating agent, R⁵ represents an alkyl group having 1 to 4 carbon atoms and p and q represent numbers satisfying relations of: p≧0, q≧0 and p+q≧3, and products of partial hydrolysis of the compounds.

9. A coating composition according to any one of Claims 5, 6 and 8, wherein M¹ represents a metal selected from Al³⁺, Ga³⁺, In³⁺, La³⁺, Fe³⁺, Y³⁺, Eu³⁺, Ti⁴⁺ and Zr⁴⁺.

10. A coating composition according to any one of Claims 5 and 6, wherein A represents at least one base selected from SO₄²⁻, HSO₄⁻, NO₃⁻, Cl⁻, Br⁻, I⁻, SCN⁻, CH₃₋ₘX²ₘCOO⁻, X² representing an atom or a group selected from F, Cl, Br and CN and m representing a number of 1, 2 or 3, and CH₃COCOO⁻.

11. A coating composition according to any one of Claims 5 and 8, wherein the chelating agent is a compound selected from β-diketones.
